# EUROPEAN PATENT APPLICATION

(11) **EP 1 213 515 A1**
(43) Date of publication of application: **12.06.2002**
(21) Application number: 01934458.9
(22) Date of filing: 31.05.2001
(51) Int. Cl.: F16J 15/10, F16J 15/18

(54) **SEAL MEMBER**

(30) Priority: 05.06.2000 JP 2000167362; 16.06.2000 JP 2000181466
(71) Applicant: Kabushiki Kaisha Toyota Jidoshokki, Kariya-shi, Aichi-ken 448-8671 (JP)
(72) Inventor: KURAMOTO,Satoru KABUSHIKI KAISH.TOYOTA JIDOSHokki, Kariya-shi, Aichi 448-8671 (JP); YAMADA,Takeshi KABUSHIKI KAISHA TOYOTA JIDOSHokki, Kariya-shi, Aichi 448-8671 (JP)
(74) Representative: Leson, Thomas Johannes Alois, Dipl.-Ing.
(86) International application number: JP0104603
(87) International publication number: WO0194814

(57) **Abstract**

A ring-shaped sealing member comprises a ring-shaped base material having elastic properties, and a barrier film formed on a surface of the base material. The barrier film is comprised of a resin material which is less permeable to gas than a butyl rubber. Another ring-shaped sealing member of the present invention comprises, only at part of the circumferential direction thereof, a stretching portion which is stretchable in the circumferential direction. Therefore, the operation efficiency in the fitting is improved, and a leakage of a gas can be satisfactorily prevented. In addition, the sealing member has a simple structure, and thus is able to downsize a housing to which the sealing member is fitted. Further, permeation of CO₂ gas can be satisfactorily controlled.

## Description

### Technical Field

The present invention relates to a sealing member for sealing housing members jointed to one another or sealing a rotating shaft supported by the housing.

### Background Art

A general compressor used in an air conditioner comprises a housing comprised of a plurality of housing members. The housing members are jointed to the adjacent ones through bolts. A sealing member for preventing gas leakage is provided between the adjacent housing members.

Japanese Unexamined Patent Publication Nos. Hei 8-261150 and Hei 9-42156 disclose a multiple sealing mechanism in which a plurality of sealing members made of a rubber are provided between adjacent housing members.

In recent years, from the viewpoint of achieving a reduction of effects on the environment, the use of carbon dioxide (CO₂) as a refrigerant for air conditioners has been proposed. However, a rubber is permeable to CO₂. In addition, when CO₂ is used as a refrigerant, the pressure in the air conditioner is considerably high, as compared to that in the case where a Fluorocarbon is used. For this reason, the conventional sealing member made of a rubber cannot satisfactorily prevent CO₂ from leaking.

Further, when a multiple sealing mechanism is employed or the cross-sectional area of the sealing member made of a rubber is increased for improving the sealing performance, it is necessary that the size of the portion of the housing member corresponding to the sealing member be increased, thus causing the housing to be large in size.

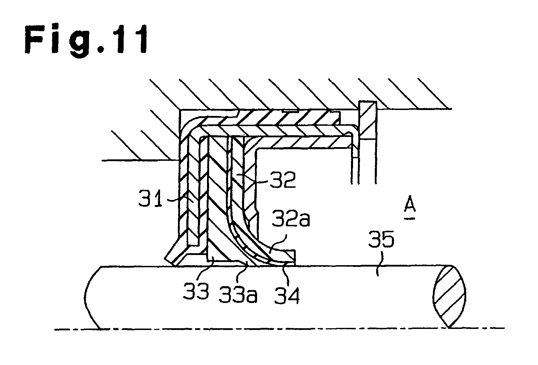

As shown in Fig. 11, Japanese Unexamined Utility Model Publication No. Hei 5-57520 discloses a lip-shaped seal for sealing rotating shaft 35 supported by a compressor housing. Character A indicates a closed space defined in the compressor housing. The lip-shaped seal comprises a lip member 32 provided in a casing 31 made of a metal. The lip member 32 is supported by a supporting ring 33 made of a resin having a higher stiffness than an elastomer.
The lip member 32 comprises a main body 32a made of a resin, which has a higher stiffness than an elastomer and which is less permeable to Fluorocarbon, and a synthetic rubber film (fluororubber film) 34 coated on the main body 32a. A synthetic rubber film 34 is in contact with the outer surface of a rotating shaft 35. The supporting ring 33 has a lip portion 33a which is bent and in contact with the outer surface of the rotating shaft 35.

However, when the lip-shaped seal shown in Fig. 11 is used, the synthetic rubber film 34 which is permeable to CO₂ is in contact with the outer surface of the rotating shaft 35. Therefore, the lip-shaped seal shown in Fig. 11 is used in the compressor using a CO₂ refrigerant, the leakage of CO₂ is not satisfactorily prevented. The supporting ring 33 made of a resin is in contact with the outer surface of the rotating shaft 35, but the supporting ring 33 is intended to support the lip member 32 and has no satisfactory sealing performance.

Further, Japanese Unexamined Patent Publication No. Hei 8-270799 discloses an O-ring made of a nitrile rubber. The O-ring comprises an inner layer having an acrylonitrile content of 30 to 45 % and an outer layer having an acrylonitrile content of 15 to 25 %. The inner layer having a higher acrylonitrile content is less permeable to gas, and the outer layer having a lower acrylonitrile content is advantageously in close contact with the housing.

However, the inner layer containing a large quantity of acrylonitrile is hard and poor in flexibility. Such a layer lowers the operation efficiency in the O-ring fitting operation.

In addition, the outer layer which is more permeable to gas than the inner layer lowers the sealing performance of the O-ring for gas. Further, even when the acrylonitrile content of the inner layer is 30 to 45 %, the sealing performance for CO₂ is not satisfactory.

### DISCLOSURE OF THE INVENTION

The present invention provides a sealing member which is advantageous not only in that it improves the efficiency in the fitting operation and has an excellent sealing performance for gas, but also in that it has a simple and small-size structure, especially a sealing member which can be advantageously used in a compressor using a CO₂ refrigerant.

For attaining the above object, the ring-shaped sealing member of the present invention comprises a ring-shaped base material having elastic properties, and a barrier film formed on a surface of the base material. The barrier film is comprised of a resin material which is less permeable to gas than a butyl rubber.

Another ring-shaped sealing member of the present invention comprises, only at part of the circumferential direction thereof, a stretching portion which is stretchable in the circumferential direction.

### BRIEF DESCRIPTION OF THE DRAWINGS

Fig. 1(a) is a front view of an O-ring according to a first embodiment of the present invention.
Fig. 1(b) is a cross-sectional view taken along the line 1b-1b in Fig. 1(a).
Fig. 1(c) is a partially cross-sectional view showing the state of the O-ring fitted.
Fig. 2 is a partially cross-sectional view of a lip-shaped seal according to a second embodiment of the present invention.
Fig. 3 is a partially cross-sectional view of a lip-shaped seal according to a third embodiment of the present invention.
Fig. 4(a) is a partially cross-sectional view of a compressor having a gasket according to a fourth embodiment of the present invention.
Fig. 4(b) is an enlarged partially cross-sectional view of the gasket shown in Fig. 4(a).
Fig. 4(c) is a front view of the gasket shown in Fig. 4(a).
Fig. 5 is a front view of an O-ring according to a fifth embodiment of the present invention.
Fig. 6 is a cross-sectional view taken along the line 6-6 in Fig. 5.
Fig. 7 is a partially cross-sectional view of the O-ring shown in Fig. 6.
Fig. 8 is a cross-sectional view taken along the line 8-8 in Fig. 5.
Fig. 9 is a front view of an O-ring according to a sixth embodiment of the present invention.
Fig. 10 is an enlarged cross-sectional view of an O-ring according to a seventh embodiment of the present invention.
Fig. 11 is a partially cross-sectional view of a conventional lip-shaped seal.

### BEST MODE FOR CARRYING OUT THE INVENTION

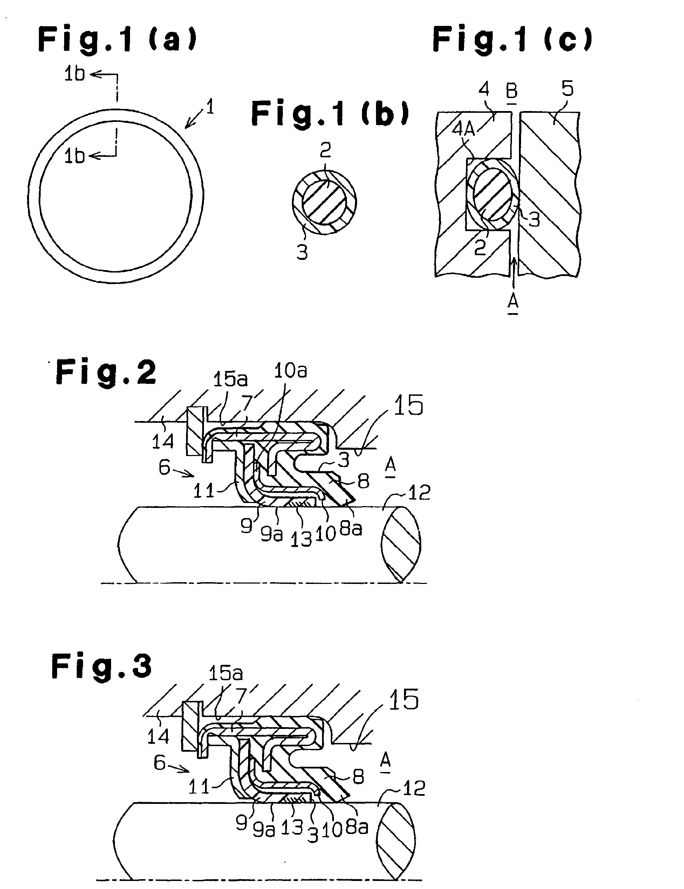

Hereinbelow, the first embodiment embodying the present invention will be described with reference to Figs. 1(a) to 1(c).

As shown in Figs. 1(a) and 1(b), O-ring 1 as a ring-shaped sealing member comprises a base material 2 in a ring-shaped, and a gas barrier film 3 which covers the surface of the base material 2. The base material 2 is formed from a material having elastic properties, for example, a rubber or an elastomer. In the present embodiment, the base material 2 is formed from a hydrogenated nitrile rubber having a relatively low acrylonitrile content (e.g., 20 %).

The gas barrier film 3 is formed from a resin material which is less permeable to gas, for example, CO₂ than a butyl rubber. Specifically, the gas barrier film 3 is comprised of an acrylonitrile-butadiene copolymer having an acrylonitrile content of 50 % or more. The acrylonitrile-butadiene copolymer having a higher acrylonitrile content is much less permeable to CO₂, but the elastic properties become poor and thus such a copolymer becomes brittle. Therefore, when the gas barrier film 3 is too large in thickness, the flexibility of the O-ring 1 is lowered, so that the O-ring 1 is not satisfactorily in contact with the contact surface. However, when the gas barrier film 3 has a reduced thickness, the flexibility of the O-ring 1 is not deteriorated, so that the O-ring 1 is advantageously in close contact with the contact surface. The gas barrier film 3 is less permeable to CO₂. Therefore, even when the gas barrier film 3 is small in thickness, the sealing performance of the O-ring 1 for CO₂ is satisfactory.

When the acrylonitrile content of the gas barrier film 3 is increased, the resultant gas barrier film 3 becomes even less permeable to CO₂. Therefore, the thickness of the gas barrier film 3 can be further reduced. For example, when the copolymer having an acrylonitrile content of about 70 % is used as the gas barrier film 3, the CO₂ permeability of the sealing member comprising the base material 2 having a cross-section diameter of 1 mm and the gas barrier film 3 having a thickness of 30 µm is about 1/10 of that of the O-ring made of a nitrile rubber disclosed in Japanese Unexamined Patent Publication No. Hei 8-270799.

The gas barrier film 3 is formed by, for example, applying to the surface of the base material 2 a solution prepared by dissolving an acrylonitrile-butadiene copolymer in a solvent, and removing the solvent by drying. As shown in Fig. 1(c), the O-ring 1 constructed as described above is disposed between housing members 4, 5 which are jointed to each other. The housing members 4, 5 together constitute, for example, a compressor housing. One housing member 4 has a ring-shaped recess portion 4a for containing therein the O-ring 1. When the housing members 4, 5 are jointed to each other, the O-ring 1 is disposed between the housing members 4, 5. A gas in a closed space A formed between the housing members 4, 5 is prevented by the gas barrier film 3 from leaking toward the air B side.

The present embodiment has the following effects.

The O-ring 1 comprises the base material 2 made of a rubber and the gas barrier film 3 made of a resin covering the base material 2. The base material 2 has excellent flexibility, and therefore, the O-ring 1 can be easily fitted into the ring-shaped recess portion 4a. Further, the O-ring 1 is advantageously in close contact with both housing members 4, 5. In addition, the resin forming the gas barrier film 3 is less permeable to gas than a butyl rubber, thus making it possible to surely prevent a gas leakage.

The gas barrier film 3 is comprised of a resin material which is less permeable to CO₂ than a butyl rubber. Therefore, when the O-ring 1 is used in a compressor using CO₂ as a refrigerant, the refrigerant can be satisfactorily prevented from leaking.

The gas barrier film 3 contains acrylonitrile in an amount of 50 % or more. Therefore, the gas barrier film 3 is even less permeable to CO₂. By adjusting the acrylonitrile content of the gas barrier film,3, the gas barrier performance of the gas barrier film 3 can be easily adjusted.

The base material 2 is made of a nitrile rubber, and the gas barrier film 3 is made of an acrylonitrile-butadiene copolymer having an acrylonitrile content of 50 % or more. Therefore, the base material 2 and the gas barrier film 3 have good affinity with each other, and the gas barrier film 3 is difficult to peel itself off the base material 2, thus improving the O-ring 1 in durability.

Next, a second embodiment specifically applying the present invention to a lip-shaped seal used in a compressor will be described with reference to Fig. 2. The compressor comprises a housing 14, and a rotating shaft 12 inserted into a through hole 15 of the housing 14. Part of the through hole 15 forms a container chamber 15a for containing therein a lip-shaped seal 6. Fig. 2 is a cross-sectional view showing the upper half of the compressor, taken along the shaft line of the rotating shaft 12.

The lip-shaped seal 6 comprises an outer ring 7 made of a metal, a first sealing member 8 made of a hydrogenated nitrile rubber, a second sealing member 9 made of a fluororesin, a retaining member 10 made of a metal, and an inner ring 11. The lip-shaped seal 6 is fitted into a container portion 15 so that the outer surface of the first sealing member 8 is pressed and brought into contact with the sidewall of the container portion 15. A space A in the housing 14 is kept by the lip-shaped seal 6 away from the outside. The outer ring 7 is insert molded onto the first sealing member 8. The gas barrier film 3 covers the almost entire surface of the first sealing member 8. The material for the first sealing member 8 is the same as that for the base material 2 shown in Figs. 1(a) to 1(c). In addition, the material for the gas barrier film 3 is the same as that for the gas barrier film 3 shown in Figs. 1(a) to 1(c). Specifically, the first sealing member 8 is a hydrogenated nitrile rubber having an acrylonitrile content of about 20 %. The gas barrier film 3 is an acrylonitrile-butadiene copolymer having an acrylonitrile content of 50 % or more.

The cross-section of each of the retaining member 10 and the second sealing member 9 is substantially in an L-shape. A flange 10a of the retaining member 10 is disposed between the sealing members 8 and 9. The entire surface of the retaining member 10 opposite to the first sealing member 8 is in contact with the first sealing member 8. The second sealing member 9 has a contact surface 9a which is in contact with the rotating shaft 12. In the contact surface 9a, a spiral groove 13 for guiding a lubricating oil to the space A is formed.

On the surface of the first sealing member 8, the gas barrier film 3 which is less permeable to gas (CO₂) than a butyl rubber is formed. The first sealing member 8 has excellent flexibility, and therefore the lip-shaped seal 6 can be easily fitted into the container chamber 15a. Further, the lip-shaped seal 6 is advantageously in close contact with the housing 14. In addition, the gas barrier film 3 can satisfactorily prevent a gas from leaking.

Next, the lip-shaped seal 6 according to a third embodiment of the present invention is shown in Fig. 3. In the present embodiment, the gas barrier film 3 is formed on the second sealing member 9 only on the surface thereof opposite to the retaining member 10 and at the tip portion thereof. The present embodiment has the same effects as those of the embodiment shown in Fig. 2.

The gas barrier film 3 may be formed either on the entire surface of the second sealing member 9 including the contact surface 9a or on the surfaces of the second sealing members 8, 9.

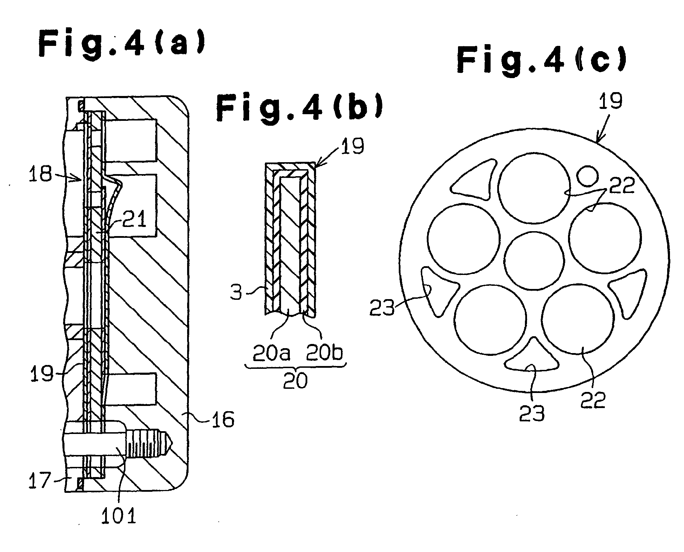

Next, a fourth embodiment of the present invention is described with reference to Figs. 4(a) to 4(c). As shown in Fig. 4(a), a compressor comprises a rear housing 16 and a cylinder block 17 which are jointed to each other through a bolt 101. A valve plate assembly 18 is disposed between the rear housing 16 and the cylinder block 17. The valve plate assembly 18 comprises a main plate 21 in which an intake port and a discharge port are formed, and a gasket 19.

As shown in Fig. 4(b), the gasket 19 comprises a base material 20 in which a rubber layer 20b is formed on the surface of a metal plate 20a, and the gas barrier film 3 formed on the surface of the base material 20. As shown in Fig. 4(c), the gasket 19 has holes 22 at positions corresponding to the intake port and the discharge port formed in the main plate 21. Further, the gasket 19 has a through hole 23 through which the bolt 101 is inserted. In Fig. 4(b), the rubber layer 20b and the gas barrier film 3 are shown so that they have substantially the same thickness, but the thickness of the gas barrier film 3 is actually one-several tens or less of the thickness of the rubber layer 20b.

In the present embodiment, the gas barrier film 3 suppresses a leakage of the gas in the compressor away from the housing. In addition, the rubber layer 20b has excellent flexibility, and therefore the gasket 19 is advantageously in close contact with the rear housing 16 and the cylinder block 17.

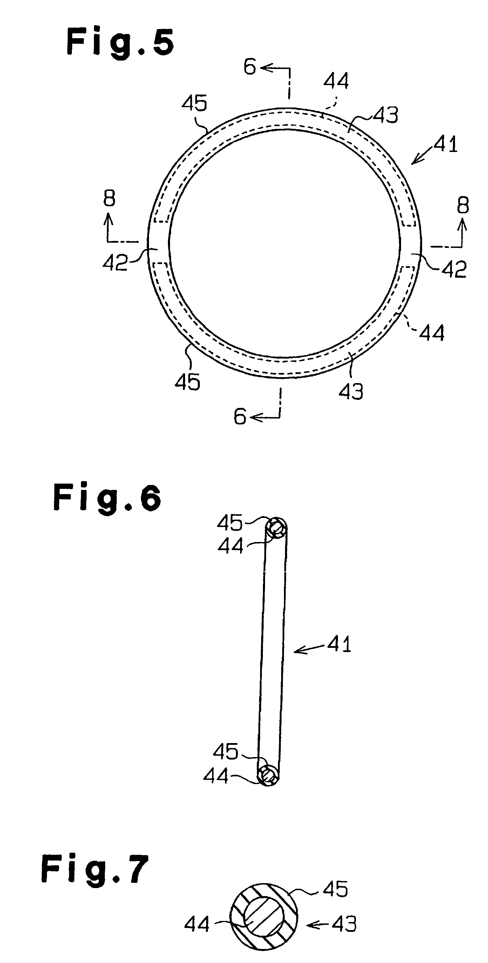

Next, a fifth embodiment of the present invention will be described with reference to Figs. 5 to 8. Like the embodiment shown in Figs. 1(a) to 1(c), the present embodiment is directed to an O-ring for sealing between the housing members 4 and 5. An O-ring 41 comprises two stretching portions 42 which are stretchable, and two multilayer portions 43 which are not stretchable.

The two multilayer portions 43 constitute most of the circumferential direction of the O-ring 41. As shown in Figs. 5 and 7, the multilayer portion 43 comprises, as a barrier material, a core material 44 comprised of a metal material which is less permeable to CO₂, and, as an elastomer, a rubber film 45 which covers the surface of the core material 44. The rubber film 45 is formed from, for example, a rubber material, such as a nitrile rubber or a hydrogenated nitrile rubber. The core material 44 is a circular arc metallic bar having a cross-section in a circular form.

As shown in Figs. 5 to 8, the stretching portions 42 connect together the multilayer portions 43. The stretching portion 42 is made of the same material as that for the rubber film 45, and integrally formed with the rubber film 45.

As a method for producing the O-ring 41, for example, insert molding is employed. A rubber material is injected into a mold having placed therein the core material 44 to shape the O-ring 41.

The stretching portion 42 has an elastic modulus far larger than that of the core material 44 made of a metal. Therefore, as the stretching portions 42 are stretched, both multilayer portions 43 move closer to or separate from each other.

As described above, the stretching portions 42 are formed on part of the O-ring 41, and the core material 44 which is less permeable to CO₂ on the remaining portion. Thus, the O-ring 41 has flexibility and is less permeable to CO₂. Therefore, there is no need to dispose the multiple O-rings or increase the O-ring in diameter for improving the sealing performance. Thus, a space in which the O-ring 41 is placed need not be large. Further, the seal structure is simple, as compared to the construction in which the multiple O-rings are disposed.

The rubber film 45 for the multilayer portions 43 is integrally molded with the stretching portions 42. Therefore, the stretching portions 42 and the multilayer portions 43 are firmly connected to each other. The O-ring 41 can be easily formed by insert molding, thus improving the productivity of the O-ring 41.

The core material 44 is covered with the rubber film 45. Therefore, the O-ring 41 is advantageously in close contact with the contact surface. Thus, a high sealing performance can be secured.

The O-ring 41 has a plurality of stretching portions 42. Therefore, the O-ring 41 is easy to stretch, thus improving the efficiency in the fitting operation.

Even if the O-ring 41 has a shape slightly different from the shape of the portion to which the O-ring 41 is fitted, if the number of the stretching portions 42 is large, the O-ring 41 can be easily deformed so as to fit the shape of the portion to which the O-ring 41 is fitted. As a result, the sealing performance of the O-ring 41 is enhanced.

For example, in the compressor using CO₂ as a refrigerant, the pressure of CO₂ is extremely high. It is especially effective to apply the O-ring 41 of the present embodiment having excellent sealing performance to the above compressor.

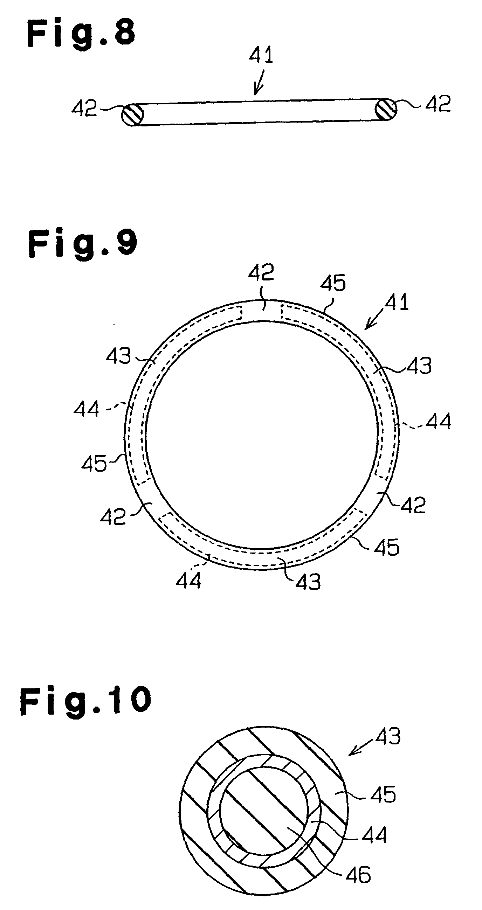

Next, a sixth embodiment of the present invention is described with reference to Fig. 9. The present embodiment is an example of modification of Figs. 5 to 8. In the present embodiment, the O-ring 41 has three multilayer portions 43 and the stretching portions 42. By virtue of having such a construction, the O-ring 41 is more easily deformed than the O-ring 41 in Figs. 5 to 8, and the efficiency in the fitting operation is further improved, as compared to that in the embodiment in Figs. 5 to 8.

Next, a seventh embodiment of the present invention is described with reference to Fig. 10. In the present embodiment, the core material 44 is formed to be hollow, and the inner space of the core material 44 is filled with a rubber material 46 which is comprised of the same material as that for the rubber film 45. The rubber material 46 is molded, for example, simultaneously with the molding of the rubber film 45 in the insert molding of the O-ring 41. The rubber film 45 and the rubber material 46 are integrally formed with the rubber forming the stretching portions 42, so that the stretching portions 42 and the multilayer portions 43 are connected to one another more firmly. The core material 44 may be filled with the rubber material 16 only around both end portions of the core material 44.

The embodiments may be modified, for example, as follows.

The present invention is not limited to the O-rings 1, 41, each having a cross-section in a circular form, but may be applied to a sealing member having a cross-section in a D-shape, a rectangular form, or a C-shape.

The material for the base material 2 in the embodiment shown in Figs. 1(a) to 1(c) is not limited to the hydrogenated nitrile rubber but may be another rubber. Further, the material for the base material 20 shown in Fig. 4(b) may be another rubber. When a hydrogenated nitrile rubber or a nitrile rubber is used, the acrylonitrile content is not limited to 20 % but preferably 15 to 49 % which exhibits appropriate elastic properties.

In each of the embodiments shown in Figs. 1(a) to 4(c), the acrylonitrile content of the gas barrier film 3 may be 50 % or more, preferably 60 % or more, further preferably 70 % or more.

The gas barrier film 3 is not limited to the acrylonitrile-butadiene copolymer having an acrylonitrile content of 50 % or more but may be another acrylonitrile copolymer. For example, it may be an acrylonitrile-styrene copolymer or acrylonitrile-butadiene-styrene copolymer having an acrylonitrile content of 50 % or more.

The material for the gas barrier film 3 is not limited to the acrylonitrile copolymer but may be any resin material as long as the resin material is less permeable to gas than a butyl rubber, and, for example, it may be nylon or polyvinylidene chloride.

The structure of the gas barrier film 3 is not limited to a structure comprising one layer but may be a structure comprising a plurality of layers having different material compositions. For example, when an acrylonitrile-butadiene copolymer is used as the gas barrier film 3, the outermost layer may be formed from a material having the highest acrylonitrile content and the inner layers may be formed from materials having acrylonitrile contents which reduce such that the innermost layer has the smallest content. In this case, since the compositions of the adjacent layers are close to one another, the gas barrier film 3 is advantageously in close contact with the base material 2.

In each of the embodiments shown in Figs. 5 to 10, the core material 44 may not be made of a metal. For example, the core material 44 may be made of a resin as long as it is less permeable to gas.

In each of the embodiments shown in Figs. 5 to 10, the rubber film 15 may not be formed on the surface of the core material 44.

The O-ring 41 may have only one stretching portion 42.

The O-ring 41 is not limited to one which is less permeable to CO₂. For example, it may be one which is less permeable to Fluorocarbon gas.

## Claims

1. A ring-shaped sealing member comprising:
a ring-shaped base material having elastic properties; and
a barrier film which is formed on a surface of said base material and is comprised of a resin material, wherein said resin material is less permeable to gas than a butyl rubber.

2. The sealing member according to claim 1, wherein said base material is made of a rubber.

3. The sealing member according to claim 1 or 2, wherein said resin material constituting said barrier film is less permeable to carbon dioxide than a butyl rubber.

4. The sealing member according to any one of claims 1 to 3, wherein said barrier film contains acrylonitrile in an amount of 50 % or more.

5. The sealing member according to any one of claims 1 to 4, wherein said base material is comprised of a nitrile rubber, and wherein said barrier film is comprised of an acrylonitrile-butadiene copolymer containing acrylonitrile in an amount of 50 % or more.

6. The sealing member according to any one of claims 1 to 5, which is an O-ring.

7. The sealing member according to any one of claims 1 to 5, which is a lip-shaped seal.

8. A ring-shaped sealing member comprising, only at part of the circumferential direction thereof, a stretching portion which is stretchable in the circumferential direction.

9. The sealing member according to claim 8, wherein a portion other than said stretching portion is formed from an elastomer and a barrier material which is less permeable to gas.

10. The sealing member according to claim 9, wherein said elastomer covers said barrier material.

11. The sealing member according to any one of claims 8 to 10, wherein said stretching portion is one of a plurality of stretching portions disposed in the circumferential direction of said sealing member at a predetermined interval.

12. The sealing member according to any one of claims 8 to 11, wherein said portion other than said stretching portion is formed from a material which is less permeable to carbon dioxide.

## Amended claims

### Amended claims under Art. 19.1 PCT

1. (Amended) A ring-shaped sealing member comprising:
a ring-shaped base material having elastic properties; and
a barrier film formed on a surface of said base material, the barrier film being comprised of a resin material which contains acrylonitrile in an amount of 50 % or more.

2. (Amended) The ring-shaped sealing member according to claim 1, wherein said base material is made from a rubber.

3. (Cancelled)

4. (Cancelled)

5. (Amended) The sealing member according to claim 1 or 4, wherein said base material is comprised of a nitrile rubber, and said barrier film is comprised of an acrylonitrile-butadiene copolymer containing acrylonitrile in an amount of 50 % or more.

6. (Amended) The ring-shaped sealing member according to any one of claims 1, 2 and 5, which is an O-ring.

7. (Amended) The ring-shaped sealing member according to any one of claims 1, 2 and 5, which is a lip-shaped seal.

8. (Cancelled)

9. (Cancelled)

10. (Cancelled)

11. (Cancelled)

12. (Cancelled)
